# NEW EUROPEAN PATENT SPECIFICATION

(11) **EP 2 482 678 B2**
(45) Date of publication and mention of the opposition decision: **16.03.2022**
(45) Mention of the grant of the patent: 10.07.2013
(21) Application number: 10773642.3
(22) Date of filing: 28.09.2010
(51) Int. Cl.: A23L 1/304, A23C 19/02, A23C 19/05, A23C 19/068, A23C 19/09

(54) **CHEESE AND METHOD FOR ITS MANUFACTURING**
KÄSE UND VERFAHREN ZU SEINER HERSTELLUNG
FROMAGE ET SON PROCÉDÉ DE FABRICATION

(30) Priority: 30.09.2009 FI 20096001
(43) Date of publication of application: 08.08.2012
(73) Proprietor: Valio Ltd., 00370 Helsinki (FI)
(72) Inventor: MARTIKAINEN, Emmi, FI-02610 Espoo (FI); UUSI-RAUVA, Janne, 02920 Espoo (FI)
(74) Representative: Kolster Oy Ab
(86) International application number: PCT/FI2010/050746
(87) International publication number: WO 2011/039414

(56) References cited:
- EP-A1- 0 365 173
- EP-A1- 1 884 165
- EP-A1- 2 030 512
- EP-A2- 2 198 720
- EP-B1- 1 061 811
- WO-A1-99/40798
- WO-A1-02/089592
- WO-A1-2006/084573
- WO-A1-2006/087350
- US-A- 5 225 220
- US-A- 6 090 417
- W. Tungjaroenchai et al., J. Dairy Sci. 84: 2117-2124, 2001
- U. Bütikofer et al, J. Dairy Sci. 91:29-38, 2008
- Al-Oitabi M. et al, International Dairy Journal, 16, 903-909, 2006
- Harju et al, International Journal of Dairy Technology, Vol 54, No 2 May 2001
- Drake et al. Food Res. Int., Vol. 30, No. 1, pp35-4O, 1997
- Ryhaenen et al., Int. Dairy Journal, 11, 441-447, 2001
- Korhonen et al., Int. Dairy Journal, 16, 945-960, 2006.
- Johnson et al. Comprehensive reviews in food science and food safety, Vol 8, issue 3, June 2009, pages 252-268
- Valence et al, Journal of Dairy Research (1998)65, 609-620
- Korhonen H., Journal of functional foods, 2009, 1:177-87
- López-Fandino et al, International Dairy Journal, 2006 16:1277-93
- Bütikofer et al, International Dairy Journal, 2007 17:968-75
- Matsuura et al, Milchwissenschaft, 2005, 60(1)24-27
- Cheese, chemistry, physics and microbiology, P.F. Fox et al, 3rd Ed., 2004, 125-126
- Experiment station record, vol. V 1893-1894, Washington, 1895, 247-248

## Description

### Field of the invention

The invention concerns a cheesemaking technique and relates to a method for manufacturing a ripened cheese and cheese-like product which are at least low-salt (low-sodium) and at most medium-fat. The invention also relates to a method for improving organoleptic properties of a ripened cheese and cheese-like product which are at least low-salt (low-sodium) and at most medium-fat by using milk- and/or whey-based minerals. The invention also relates to a method for reducing, eliminating and/or covering organoleptically detectable defects of a ripened cheese and cheese-like product which are at least low-salt (low-sodium) and at most medium-fat. The invention also relates to a method for retaining the organoleptic properties of a ripened cheese and cheese-like product which are at least low-salt (low-sodium) and at most medium-fat and/or for maintaining them as customary. The invention further relates to use of milk- and/or whey-based minerals for preventing quality defects of organoleptic properties of a ripened cheese and cheese-like product which are at least low-salt (low-sodium) and at most medium-fat.

### Background of the invention

A healthy diet is still a key factor in preventing cardiovascular diseases. The greatest risks of having diseases are incurred by the use of saturated (hard) fat and excessive salt. Stricter laws and health recommendations put pressure on salt reduction.

In order to make it easier for consumers to choose food products having favourable content and composition of fat and salt, 'Heart Symbol' marking system has been established in Finland. 'Heart Symbol' indicating the nutritional quality of products is given for ripened cheeses and similar products which have to fulfil the criteria of fat content (fat ≤ 17 g/100 g) or, if the fat content is more than 17 g to 30 g/100 g, fat quality (hard fat ≤ 33% of fat) and salt content (sodium ≤ 480 mg/100 g). Heart Symbol informs a consumer at one glance of the fact that, in its product category, the marked product is a nutritionally better choice in terms of salt as well as fat quality and quantity. Heart Symbol increases supply and makes it easier to select groceries for purposes of a healthy diet.

There are already ripened cheeses and cheese-like products fulfilling the criteria for Heart Symbol on the market, such as Ilmajoen Osuusmeijeri; Omega Edami 17%; Oliivi Edami 17%; Kyrönmaan Juustomestarit Oy; Julia 10; Julia 17, Julius; Norrost; Västan 10%, Skånemejerier, MiniMi Herrgård, MiniMi Präst, Valio Oy Punaleima Emmental 17. However, these products are not particularly low-salt. The sodium content of the cheeses and cheese-like products is at least 0.3%, typically at least 0.4%.

There are no ripened cheeses or similar products on the market that are low-salt products having less than 0.3% of sodium or particularly low-salt, i.e. salt-free, products having less than 0.12% of sodium and that would thus advance eating habits, health and well-being. Today there is a great interest, need and demand for ripened cheeses and cheese-like products that advance eating habits, health and well-being and, in particular, contain even less sodium.

Reduction of the salt content of cheese has been topical for many years. In terms of table salt (NaCl), there have been low-salt (NaCl < 0.3%) and salt-free fresh cheeses (cream cheeses) and quarks on the European market for many years. Methods are known for replacing salt with magnesium salts (see e.g. WO 90/15541), for instance, which often causes a taste defect of bitterness and acidity. When table salt is reduced and the sodium content decreases, disadvantageous effects of other minerals on organoleptic properties, particularly taste, of the product become stronger. Publication WO 2004/049828 describes a process for the manufacture of a salt whey product, the NaCl content of which is at least 30%. The obtained salt may be used for cheesemaking, and the publication describes the manufacture of Cheddar cheese and processed cheese, the NaCl content in the cheese product being approximately 2%.

Publication US 5 225 220 A discloses a fat free, cholesterol free, low calorie process cheese product. The finished product contains approximately 57-58% moisture and about 1% salt. Publication EP 1 884 165 A1 describes low-fat processed cheese slices containing 51 % reduced-fat natural cheddar cheese, 27% water, 11 % whey and milk protein, 3.5% flavours, 2.6% emulsifiers, 2.1 % nutrients, 1% sodium chloride salt, 1% stabilizers, 0.15% preservatives, and 0.05% colour. Publication WO 99/40798 A1 discloses the use of a whey salt powder in industry and households, characterized in that the whey salt powder substitutes totally or partly for the conventional salt used in food and food products. Publication Us 6 090 417 A discloses a method of making flavourful, organoleptically pleasing natural cheese containing a nutritional supplement.

It has been challenging to bring low-salt ripened cheeses to the market particularly because of their taste and texture and the inflexibility of the production process for traditional, ripened cheese. This has been a problem of low-sodium and low-fat ripened cheeses and cheese-like products in particular. Particular problems include, for example, even distribution of minerals replacing table salt in cheese, microbiological shelf life of cheese without the protection provided by added table salt, possible changes required by the process, such as cooling of cheese (special investments) and, above all, how the cheese is provided with a sufficient taste.

Hence, there is a constant and obvious need for developing methods for improving the taste and other organoleptic properties, reducing, eliminating and/or covering taste defects and/or off-tastes, and retaining and/or maintaining organoleptic properties with natural methods without the use of special additives or ingredients but by using natural products similar to mineral salt and suitable cheesemaking methods for ripened cheeses.

Salt is an important factor in taste and flavour, and its reduction from cheeses has not been successful. Low-salt ripened cheeses tend to taste weak or be tasteless and have a sticky and soft texture. Low-fat ripened cheeses, in turn, tend to taste weak and bitter and have a gummy texture. Typical descriptions of defects in smell and taste of ripened cheeses include: acrid, salty, salt-free, low-salt, tasteless, flavourless, mild and unclean. Defects in appearance and texture of ripened cheeses include: sticky, chewy and gummy. Defects in taste and texture induced by a low salt content are concealed by fat, which makes it difficult to fulfil the criteria for obtaining Heart Symbol in terms of fat quality and quantity. To achieve consumer acceptance, the organoleptic properties of cheeses and cheese-like products which are low-salt products containing less than 0.3% of sodium or particularly low-salt, i.e. salt-free, products containing less than 0.12% of sodium must be acceptable and comparable to the properties of cheeses with a normal salt content.

In the production of ripened cheese, including cheeses defined in the Codex Standards, such as Edam, Emmental, Gouda, Havarti, and a plurality of special cheese types, for example such known trademarks as Jarlsberg^{®}, Grana, Oltermanni^{®}, Turunmaa^{®}, Finlandia^{®}, the salt content of the cheese is high, 1.3 to 1.9% (corresponds to 0.5 to 0.7% of sodium). The salt content of low-fat cheeses is typically 1.4 to 1.9% as the salt content is increased when the fat content is decreased.

There is a lot of literature on cheesemaking. Salting of conventional cheese is carried out by immersing the final pressed cheese in brine for a suitable time period, typically a brine treatment lasts from one hour to three days. During salting, salt is transferred from water to cheese and often the cheese gives off water (drainage of whey/wheying-off). Cheeses may also be salted with dry salt or by other methods, such as injection. Depending on the cheese type etc., salting of cheeses lasts from less than one hour to as long as 30 to 40 days.

In the production of Cheddar cheese, the cheese is allowed to set and, if necessary, turned over until the pH reaches a suitable level, e.g. 5.4. This pre-cheese is milled and salted prior to moulding. Alternatively, a cheese curd is conveyed to conveyor belts, where it acidifies to said pH value, for instance. Next, salt is added. This process step in the production of Cheddar cheese is called cheddaring. Cheddaring gives this cheese its typical texture and enables stirring of this mass. After the cheddaring step, the granular, salted curd is placed into a mould or the like and pressed into Cheddar cheese. Cheddar cheese need not usually be salted separately. There are no Cheddar cheeses on the market that fulfil the Heart Symbol criteria relating to fat content and sodium content. A low-salt Cheddar cheese containing less than 0.21% of sodium and having a fat content of more than 32% and, correspondingly, a low-fat (7%) Cheddar cheese rich in salt (sodium content of 612 mg/100 g) are known (USDA National Nutrient Database for Standard Reference).

Prior to cheesemaking, the fat content of milk is adjusted to have a correct proportion to the protein content of milk, and the milk is heat-treated in a suitable manner, e.g. pasteurized. It is also possible to use various bacteria separation methods. The obtained milk is transferred to a cheese vat at a suitable temperature, such as 31°C. A starter and other necessary additives and ingredients are added to the vat. Finally, a rennet (animal rennet, plant rennet or a microbiologically prepared chymosin) is added. The following steps of cheesemaking include: coagulating or curdling/renneting of milk, cutting the coagulum into pieces, stirring and possible heating of the cheese curd mixture, pressing the curd into a desired shape, salting and cellaring (storage), i.e. ripening, of the pressed cheeses. The purpose of the vat stage is to provide a selected cheese type with a suitable granular size. Stirring, heating and other such methods enable the curd to be treated such that, in a subsequent pressing stage, high-quality cheese in terms of water and fat content can be achieved.

The production stages of cheese with a granular texture and round-eyed cheeses differ slightly from one another. The production stages for these cheeses include:
1) Cooking of cheese (additions of rennet and cultures, i.e. starters, cutting the coagulum into a curd, removal of whey, addition of water, heating, stirring) to produce a cheese curd. Due to the activity of the starters, the pH of the cheese curd decreases during cooking, and a desired texture of the curd is achieved. The curd is typically produced as a batch process in cheese vats or by a "Coagulator" process as a partly continuous process.
2) Conveying the cheese curd mixture to a discharge vat, mould or distributor. In the production of round-eyed cheese, such as Edam, Gouda, Emmental, the curd-whey mixture is transferred to a mould or a discharge vat or the like in such a manner that the curd is completely or almost completely immersed in whey. In the production of cheese with a granular texture, such as Havarti, and several Tilsit-type cheeses, such as Kreivi^{®} and Kesti^{®}, and cream cheeses (Scandinavian cream cheeses), such as Turunmaa^{®} and Oltermanni^{®}, the whey is separated from the curd mass completely or almost completely before the mass is conveyed to a mould, discharge vat or the like. The discharge vat process is a batch process, while the distributor process is a continuous process.
3) Pressing the cheese curd. In the production of round-eyed cheeses, the cheese grains are joined together by pressing the cheese, usually by means of an external pressure. The cheese is pressed in a mould, vat or the like. The mass of the cheese becomes more dense, and round eyes may be formed thereto during ripening. In the production of cheeses with a granular texture, the cheese mass coming from the discharge vat may alternatively be cut into pieces before the pressing, after which the pieces are conveyed through a mill, which mills the cheese mass into small grains. A granular structure may also be achieved by placing the cheese curd into the discharge vat after whey separation in "dry" form. In the production of cheeses with a granular texture, the grains do not join together completely, but mechanical or "granular" holes are formed, which may enlarge slightly during ripening. Cheese with a granular texture may be pressed in the same way as round-eyed cheeses but usually with a smaller force, or it is left to be pressed into its shape under the influence of its own weight. If necessary, all cheeses and particularly cheeses with a granular texture are turned over during pressing or autopressing. During the pressing stage, which can be divided into pre-pressing and final pressing, the cheese adopts its shape, the acidification continues (pH decreases) and the texture of the cheese is adjusted as desired.
4) Removal of the cheese from the mould or the like. If necessary, the cheese may be cut into blocks of more suitable size, and it is transferred to be salted. Usually cheeses are salted in brine. The cheeses are immersed in brine as long as necessary, or they are allowed to float freely. During salting, salt is transferred from water to cheese and often the cheese gives off water (drainage of whey). Cheeses may also be salted with dry salt or by other methods, such as injection. Depending on the cheese type etc., salting lasts from less than one hour to as long as 30 to 40 days.
5) Protection and ripening. After salting, the cheeses may be kept under cool conditions for some time. After this, the cheeses are protected with a bag, film or the like made of a suitable plastic material, for instance, and seamed air-tightly. The surface of the cheeses may also be treated with a protective emulsion. In the production of some cheeses, the cheeses are as such taken to ripen under suitable conditions. The cheeses are ripened under suitable conditions (temperature typically 10 to 25°C, air humidity is also often adjusted suitably) for a suitable period of time. The conditions may also vary during ripening. The production of 'surface-ripened' cheeses (blue cheeses and smear ripened cheeses) also involves cleaning and treating the cheeses with various microbial solutions.

During ripening, processes called proteolysis and lipolysis of various degrees take place, giving the cheese type its unique taste. The cheese mass becomes more elastic, and gas may form eyes in the cheese or the eyes in a cheese with a granular texture may enlarge.

Retail trade and consumers want to have ripened cheeses and cheese-like products with a flawless taste, appearance and texture and which advance eating habits, health and well-being and, particularly, contain even less sodium. It is very challenging to achieve products with an absolutely flawless taste, appearance and texture and which fulfil the expectations on a ripened cheese or cheese-like product with a very low sodium content and which have been manufactured simply and economically. It is an object of the invention to achieve products which satisfy these demands.

### Brief description of the invention

The invention relates to a method for manufacturing a ripened cheese and cheese-like product having a sodium content of at most 0.3% (w/w) and a fat content of at most 30% (w/w). In an embodiment of the invention, the invention relates to a method for manufacturing a ripened cheese and cheese-like product having a sodium content of at most 0.3% (w/w) and which fulfil at least the nutritional criteria for Heart Symbol in terms of fat content and/or fat quality. According to an embodiment of the invention, a salt-free (particularly low-sodium, i.e. the sodium content is below 0.12%) ripened cheese and cheese-like product are made.

The invention also relates to a method for improving organoleptic properties of a ripened cheese and cheese-like product having a sodium content of at most 0.3% (w/w) and a fat content of at most 30% (w/w) by using milk- and/or whey-based minerals in the preparation of the product in order to reduce, eliminate and/or cover organoleptically detectable defects. In an embodiment, the ripened cheese and the cheese-like product have a sodium content of at most 0.3% (w/w) and fulfil at least the nutritional criteria for Heart Symbol in terms of fat content and/or fat quality. According to an embodiment of the invention, the cheese and cheese-like product are salt-free (particularly low-sodium).

The invention also relates to a method for retaining the taste of a ripened cheese and cheese-like product and/or maintaining it as customary when at least table salt and fat are reduced from the product and/or the fat quality is changed.

The invention also relates to use of milk- and/or whey-based minerals for preventing quality defects of organoleptic properties of a ripened cheese and cheese-like product having a sodium content of at most 0.3% (w/w) and a fat content of at most 30% (w/w). In an embodiment, the ripened cheese and the cheese-like product have a sodium content of at most 0.3% (w/w) and fulfil at least the nutritional criteria for Heart Symbol in terms of fat content and/or fat quality.

According to an embodiment of the invention, the ripened cheese and cheese-like product are low-salt and low-fat products containing at most 17% of fat. According to a second embodiment of the invention, the ripened cheese and cheese-like product are low-salt products fulfilling the criteria for Heart Symbol in terms of fat quality, the fat content being more than 17 g to 30 g/100 g and at most 33% of the fat being hard fat. According to yet another embodiment of the invention, the ripened cheese and cheese-like product are salt-free (particularly low-sodium) products, containing less than 0.12% of sodium, and low-fat products, containing at most 17% of fat. According to yet another embodiment of the invention, the ripened cheese and cheese-like product are salt-free (particularly low-sodium) products fulfilling the criteria for Heart Symbol in terms of fat quality, the fat content being more than 17 g to 30 g/100 g and at most 33% of the fat being hard fat.

Surprisingly, it has now been detected that milk- and/or whey-based minerals prevent the taste defects and off-tastes caused by reduction of at least table salt and fat in a ripened cheese and cheese-like product. No off-taste and/or taste defect or defect in texture were detected in the ripened cheese and cheese-like product which were at least low-salt and at most medium-fat, especially which fulfilled at least the nutritional criteria for Heart Symbol in terms of fat content and/or fat quality and which were made by a conventional cheesemaking technique so that table salt was replaced by milk- and/or whey-based minerals at different stages of the cheesemaking process. What was particularly surprising was that no off-taste and/or taste defect or defect in texture were detected in the particularly low-salt and low-fat ripened cheese and cheese-like product which fulfilled the criteria for Heart Symbol and were made by a conventional cheesemaking technique by replacing table salt by milk- and/or whey-based minerals. Defects in organoleptic properties, such as taste and texture, of a product are more common in low-salt and, particularly, low-salt and low-fat products, and low-sodium products are more prone to these defects due to a reduced salt content.

The invention thus provides a method for manufacturing a ripened cheese and cheese-like product, the method avoiding the defects in organoleptic properties, such as taste, of the product caused by reductions of table salt and fat.

The ripened cheese and cheese-like product made by the method of the invention, particularly a salt-free (containing a particularly small amount, i.e. less than 0.12%, of sodium) and low-fat (containing at most 17% of fat) product, are free of organoleptically detectable defects, such as taste defects, caused by a reduction of table salt and a concurrent reduction of fat. In an embodiment of the invention, the cheese and cheese-like product made by the method of the invention fulfil the criteria for Heart Symbol in terms of sodium and fat contents and contribute to cardiovascular health.

The products of the invention increase supply and make it easier to select groceries to have a healthy diet, particularly in terms of salt. In addition, the product of the invention has a healthier mineral composition.

The object of the invention is achieved with methods that are characterized by what is stated in the independent claims.

### Brief description of figures

Figure 1 is a flow diagram showing an embodiment of a cheesemaking method according to the invention in connection with making low-salt milled ripened cheese. In the method, milk minerals (RO concentrate) are added to a pre-pressed mass.
Figure 2 is a flow diagram showing an embodiment of a cheesemaking method according to the invention in connection with making low-salt milled ripened cheese. In the method, the cheese is salted by brine salting the cheeses in milk minerals (RO concentrate).
Figure 3 is a flow diagram showing an embodiment of a cheesemaking method according to the invention in connection with making low-salt Cheddar cheese.

### Detailed description of the invention

The present invention offers a solution to avoid problematic defects in organoleptic properties of a ripened cheese and cheese-like product which are at least low-salt (low-sodium) and at most medium-fat, especially which fulfil at least the nutritional criteria for Heart Symbol in terms of fat content and/or fat quality, the defects being caused by reduction of table salt, i.e. sodium.

Surprisingly, it has now been detected that milk- and/or whey-based minerals reduce, eliminate and/or cover the taste defects and off-tastes caused by reduction of at least table salt and fat in the organoleptic properties of a ripened cheese and cheese-like product. It has been detected that particularly milk- and/or whey-based minerals reduce, eliminate and/or cover the defects and off-tastes caused by reduction of at least table salt and fat in organoleptic properties of, particularly, at least low-salt (low-sodium) ripened cheese and cheese-like product.

In an aspect, the invention provides a method for improving organoleptic properties of a ripened cheese having a sodium content of at most 0.3% (w/w) and a fat content of at most 30% (w/w), comprising a step of adding milk- and/or whey-based minerals to a milk raw material.

To obtain Heart Symbol, a cheese and a cheese-like product have to fulfil the criteria of fat content, whereby fat ≤ 17 g/100 g or, if the fat content is more than 17 g to 30 g/100 g, fat quality, whereby saturated (hard) fat ≤ 33% of the fat, and salt content, whereby sodium ≤ 480 mg/100 g.

The term 'low-salt' (low-sodium) refers in the present invention to a cheese and cheese-like product in which the amount of sodium is at most 0.3% (w/w). The terms 'salt-free' or 'particularly low-salt' or 'particularly low-sodium' refer to a cheese and cheese-like product in which the sodium content is at most 0.12% (w/w). The term 'low-fat' refers in the present invention to a cheese or cheese-like product containing at most 17% (w/w) of fat. The term 'medium-fat' refers to a cheese or cheese-like product containing more than 17% up to 30% (w/w) of fat.

The cheese made according to the present invention is a low-salt (less than 0.3% of sodium), preferably salt-free, ripened soft, semi-soft, semi-hard (solid), hard or extra hard cheese containing less than 0.12% of sodium. The expressions soft, semi-soft, semi-hard (solid), hard and extra hard are strictly defined in FAO/WHO Codex General Standard for Cheese A-6-1968. Thus,
soft cheese in the present application refers to cheese in which the water content of the fat-free part is more than 67%,
semi-soft cheese in the present application refers to cheese in which the water content of the fat-free part is 61 to 69%,
semi-hard cheese in the present application refers to cheese in which the water content of the fat-free part is 54 to 63%,
hard cheese in the present application refers to cheese in which the water content of the fat-free part is 49 to 56%,
extra hard cheese in the present application refers to cheese in which the water content of the fat-free part is less than 51%.

In addition to the aforementioned cheeses, the term "cheese" also refers hereinafter in the present application to cheese-like products. In a cheese-like product, milk fat and/or protein is replaced by another suitable fat or protein, or both, partly or completely. Typically, cheeses of the invention containing fat more than 17 g to 30 g/100 g and the fat containing at most 33% of hard fat are referred to as cheese-like products.

According to another aspect, the invention provides a ripened cheese which contains milk- and/or whey-based minerals and which has a sodium content of at most 0.3% (w/w), preferably at most 0.12%, and a fat content of at most 30% (w/w). In an embodiment, the invention relates to a ripened cheese salted with milk minerals and/or whey minerals and containing at most 0.3% of sodium and at most 17% of fat. In another embodiment, the invention relates to a ripened cheese salted with milk minerals and/or whey minerals and containing at most 0.3% of sodium and more than 17% to 30% of fat, whereby the proportion of hard fat is at most 33%. In a further embodiment of the invention, the aforementioned cheeses are salt-free, i.e. they contain at most 0.12% of sodium. In yet another embodiment of the invention, said cheeses also contain 15 to 25 mg of at least one biologically active peptide in 100 g of cheese.

In the invention, useful milk and whey minerals and mixtures thereof are obtained from the milk raw material by different separation techniques, such as chromatographic separation, membrane techniques, e.g. ultrafiltration (UF retentate, UF concentrate, UF permeate), microfiltration (MF retentate), nanofiltration (NF permeate; NF retentate), or reverse osmosis (RO retentate, RO concentrate) and combinations of different techniques. The obtained fractions, retentates and/or concentrates are condensed, evaporated and/or dried by using techniques known and accepted in the art. Whey mineral is preferably produced by reverse osmosis and evaporating to an RO retentate concentrate containing approximately 40% of dry matter.

Milk mineral is preferably produced by ultrafiltering the milk raw material, nanofiltering the obtained UF permeate and further processing the obtained NF permeate by reverse osmosis, and evaporating the obtained RO retentate to an RO retentate concentrate containing approximately 20% of dry matter. Whey mineral is preferably produced by nanofiltering the whey and further processing the NF permeate by reverse osmosis, and evaporating to an RO retentate concentrate containing approximately 35 to 40% of dry matter.

The milk and whey mineral product may also be in powder or concentrate form.

The milk raw material may be milk as such obtained from an animal, such as a cow, sheep, goat, camel, mare or any other animal that produces milk suitable for human consumption, or milk that is pre-processed as desired.

In the context of the present invention, the milk raw material refers to milk, whey, and combinations of milk and whey as such or as a concentrate. The milk raw material may be supplemented by ingredients generally used in producing milk products, such as fat or sugar fractions and/or whey and milk protein fractions, e.g. milk protein, whey protein, casein, whey and milk protein fractions, α-lactalbumin, peptides, amino acids, e.g. lycine. Fat and lactose are removed from the milk raw material by utilizing different separation techniques. The milk raw material may thus be, for instance, whole milk, cream, low-fat or skim milk, low-lactose or lactose-free milk, ultrafiltered milk, diafiltered milk, microfiltered milk, or milk reconstituted from milk powder, organic milk or a combination of these. Preferably the milk raw material is skim milk or whey (cheese whey).

The composition of a milk and whey mineral product is typically as follows (% of dry matter):
- lactose 2.4 to 50%
- sodium 3.5 to 12%
- potassium 0.5 to 35%
- magnesium 0.1 to 1.5%
- calcium 0.1 to 25%
- protein 8 to 20%.

A milk mineral may be, for example, a salt described in publication EP 1061811 B1, i.e. a milk mineral powder known as trademark Valio Milk Mineral Powder VMMP (Valio Oy). Other feasible milk-based mineral products include such trademarks as Capolac^{®} MM-0525 BG (Arla Foods Ingredients), Vitalarmor Ca (Armor Proteines) and Sodidiet 40 MI (Sodiaal Industrie).

Milk and whey minerals may also contain, for example, biologically active peptides, active small-molecule peptides, such as peptide IPP and/or peptide VPP and/or peptide LPP. The milk and whey minerals according to an embodiment of the invention are an RO retentate in concentrate or powder form, which is produced in the above manner and is, if desired, low-lactose or lactose-free and optionally contains biologically active peptides and/or probiotic bacteria, such as bifidobacteria and/or lactobacilli, and/or prebiotics and/or enzymes, particularly proteolytic enzymes, and/or flavours and/or spice and/or colouring agents. Possible other optional functional supplements/components are omega-3 fatty acids, antioxidants and/or watersoluble or fat-soluble vitamins, cholesterol content-affecting sterols and their esters, and satiety-increasing compounds or compositions, such as food fat compositions having an oil-in-water emulsion structure. In the method of the invention these optional components may be used as such or in different combinations and amounts depending on the cheese and cheese-like product to be made. Optionally the components may be added to the vat.

Quality defects of a low-salt and low-fat ripened cheese and cheese-like product include, in particular, taste defects and/or off-tastes, such as acrid, salt-free, low-salt, tasteless, flavourless, mild, unclean, as well as defects in texture, such as stickiness, chewiness and gumminess.

In organoleptic tests, an educated organoleptic panel evaluated the appearance, texture, taste and general impression of the ripened cheese according to the invention. The taste and other organoleptic properties, such as texture and smell, of the product made by the method of the invention were perceived as pleasant in the tests of the expert panel. Surprisingly, no off-taste and/or taste defect, impurity and/or defect in texture were detected at all, but the appearance, texture, taste and general impression of the low-salt (low-sodium) cheese fulfilling the nutritional criteria for Heart Symbol in terms of fat content and/or fat quality were perceived as pleasant. Nor did the addition of biologically active peptides in concentrate and powder form together with milk and whey minerals cause any unpleasant off-tastes when evaluated organoleptically. Particularly surprising was that no off-taste and/or taste defect or defect in texture were detected in the salt-free (particularly low-sodium) and low-fat ripened cheese fulfilling the Heart Symbol criteria. Shelf life of the low-sodium and salt-free (particularly low-sodium) cheese fulfilling the nutritional criteria for Heart Symbol in terms of fat content and/or fat quality was evaluated as excellent within the selling period, which means that there were no microbiological problems.

The invention provides a method for manufacturing low-sodium, particularly salt-free or especially low-sodium, cheeses which have a flawless taste and which are at most medium-fat, especially fulfil the nutritional criteria for Heart Symbol in terms of fat content and/or fat quality without extra costs. According to an embodiment of the invention, the ripened cheese is low-salt (low-sodium) and low-fat (containing at most 17% of fat). According to a second embodiment of the invention, the ripened cheese is a low-salt product fulfilling the criteria for Heart Symbol in terms of fat quality (containing more than 17 g to 30 g/100 g of fat, at most 33% of the fat being hard fat). According to yet another embodiment of the invention, the ripened cheese is salt-free (particularly low-sodium, less than 0.12% of sodium) and low-fat (at most 17% of fat). According to yet another embodiment of the invention, the ripened cheese is a salt-free (particularly low-sodium) product fulfilling the criteria for Heart Symbol in terms of fat quality (containing more than 17 g to 30 g/100 g of fat, at most 33% of the fat being hard fat).

The method of the invention provides a product contributing to cardiovascular health. A low salt and fat content of the product and/or the fat quality are factors that contribute to cardiovascular health. In addition, the optional property of the product comprises, for example, a blood pressure-reducing effect provided by biologically active peptides, which further contributes to the cardiovascular health effect of the product. The method of the invention is simple and suitable for large-scale production.

According to an embodiment of the present invention, at least some of the small-molecule peptides are provided for the product by adding, during the production, these peptides as a peptide-containing concentrate in concentrate or powder form, for instance, substantially simultaneously with milk- and whey-based milk minerals.

According to a second embodiment, at least some of the small peptides are provided for the product by fermentation so that a separate acidification with a strain of *Lactobacillus helveticus* takes place (as a separate starter or so that the cheese starter contains a strain of *L. helveticus).*

The method of the present invention may be applied to ripened cheese. In the present application, ripened cheese refers to cheese defined in FAO/WHO Codex General Standard for Cheese A-6-1968. Examples of ripened cheeses include Valio Oltermanni^{®}, Turunmaa^{®}, Finlandia^{®} and Polar^{®}.

Typical cheese types used in the method of the present invention are Edam, Emmental, Gouda, Havarti and such known trademarks or the like as Jarlsberg^{®}, Grana, Oltermanni^{®}, Turunmaa^{®} and Finlandia^{®}. These cheeses are examples of hard and ripened cheeses. Another important product application group for the invention is cheese-like products. When made according to the invention, these cheeses are at least low-salt, particularly low-salt, i.e. salt-free, cheeses of at most medium-fat, especially fulfilling the nutritional criteria for Heart Symbol in terms of fat content and/or fat quality. The sodium content of the salt-free (particularly low-sodium) ripened cheese of the invention, salted with milk- and/or whey-based minerals, is 40 to 70% lower than that of commercial products.

The cheeses according to the invention are characterized in that they are low-lactose or lactose-free cheeses in which the lactose content is typically lower than 1.5%.

In the production of cheese masses to be made in the method according to the invention, a production technique known per se is used. Prior to cheesemaking, milk is standardized (milk fat and, if necessary, protein content is adjusted to appropriate levels) and heat-treated (e.g. pasteurized), as is known in the art.

In still another aspect, the invention provides a method for manufacturing a ripened cheese having a sodium content of at most 0.3% (w/w) and a fat content of at most 30% (w/w), the method comprising the following steps of:
- renneting the milk raw material
- providing a cheese curd
- discharging the cheese curd to obtain a cheese mass
- if necessary, pre-pressing or alternatively removing at least part of the whey from the cheese mass
- optionally cheddaring, stacking and milling
- optionally salting the pre-pressed or cheddared cheese mass
- optionally cutting the cheese mass into pieces and milling
- moulding and pressing the cheese mass to cheese
- optionally brine salting the cheese
- cooling the cheese
- if desired, packing the cheese into a ripening bag and ripening
- bringing the ripened cheese into a desired size and shape,
wherein the cheese is salted with milk- and/or whey-based minerals. In an embodiment, the invention relates to a method for manufacturing a ripened cheese which is at least low-salt (low-sodium) and fulfils at least the nutritional criteria for Heart Symbol in terms of fat content and/or quality.

According to the invention, the cheeses are salted with milk- and/or whey-based minerals, whereby the composition of minerals is adjusted prior to ripening. In an embodiment of the invention, salting is performed for the pre-pressed cheese mass and/or brine salting for the moulded and pressed cheese. Brine salting may be performed simultaneously with cooling. Minerals may also be added during cooking. After salting, the cheeses may be immediately cut into pieces and ripened. Alternatively, minerals may be added to the package (such as a ripening bag). Alternatively, the cheeses may be ripened according to the invention as one big piece, typically as a bar, grind or loaf. The ripened cheese may finally be sliced, cut into pieces or grated or stamped into different shapes.

According to an embodiment, a Cheddar cheese which is at least low-salt (low-sodium) and fulfils at least the nutritional criteria for Heart Symbol in terms of fat content and/or fat quality is made, whereby the set cheese mass is cheddared, stacked and milled, and the milled cheese is salted before moulding and pressing.

The fat content of the final cheese and cheese-like product may vary from less than 5% to 17% (w/w) (low-fat), typically from 10 to 15% (low-fat cheese), or from more than 17% to 30% (when ≤ 33% of fat is hard fat; ratio of hard fat to soft fat). In a cheese-like product, milk fat may be replaced either completely or partly with vegetable fat, typically vegetable oil, such as rapeseed oil or fractioned palm oil. Hard fat refers to saturated fat, fatty acids and trans fatty acids.

Different starters and starter mixtures may also be used in the invention for producing cheese mass. The most common starters in the production of Polar^{®} include a mesophilic starter (lactococcal starter), typically starters by Christian Hansen or Danisco, propionibacteria, typically Valio PJS, and a taste imparting adjunct (mesophilic and/or thermophilic adjunct starter), typically thermophilic Valio Lb 161 (shocked/non-shocked). An example of another low-salt cheese type is Cheddar cheese, in the production of which a mesophilic 0-starter, typically R-608 by Christian Hansen, is used as a starter. The starter and its amount depend on the cheese type and the conditions used. It is known that the amount of bulk starter is usually 0.5 to 2%, typically 0.7 to 0.8%. The amount of DVS starter (DVS/DVI) is usually 0.001 to 0.2%, typically 0.01 to 0.05%. In addition to a bulk starter, the method of the invention may use, for example, LH-32, BS-10 and CR-312 by Christian Hansen as such or in different combinations and amounts depending on the cheese and cheese-like product to be made as additional starters to impart taste. Alternatively, taste imparting adjunct starters may be added substantially simultaneously with milk- and/or whey-based minerals.

As mentioned above, the cheeses made by the method of the invention may be salted before ripening, or milk- or whey-based minerals (RO retentate, VMMP) may be added to the cheese mass during cooking. What is advantageous in the invention is that milk- or whey-based minerals are added after pre-pressing and the cheeses are ripened. The amount of milk minerals and/or whey minerals typically added during pre-pressing varies from 0.1% to 10%, preferably from 0.5% to 1.5% based on the ash content of milk minerals and/or why minerals, which provides a salt-free cheese.

Typically, a technique called a discharge vat (pre-pressing vat) technique is used in cheesemaking, wherein a cheese curd cooked in a cheese vat is conveyed using discharge nozzles or mass distribution trolleys or in another manner to the bottom of a vat, levelled, when necessary, and pre-pressed into plates. Alternatively, a Casomatic distributor (the mass is conveyed directly into a mould) or a coagulator technique may be used, preferably the discharge vat technique is employed. Typically, the bottom and/or ends and/or walls of the vat may be perforated or otherwise permeable to whey. From this pre-pressed plate, pieces of suitable size are cut for moulding and pressed into cheese (moulding and pressing), salted and ripened when necessary. The cheese may also be pressed to its final shape in the vat without moulding, which is a common procedure e.g. in some Emmental processes.

In the production of Cheddar cheese, the curd is formed into pre-cheese, which is turned over, stacked and acidified for several hours in order to achieve the pH value of at least 5.8, but usually the aim is at the pH value of 5.4. As a result of this cheddaring step, the gummy structure of pre-cheese typically turns fibrous. Milling is not possible until cheddaring has ended. The purpose of this step is to cut the cheddared pre-cheese into very small pieces, which makes removal of whey and salting more effective and facilitates moulding. It is also typical of Cheddar cheese that the milled mass is salted by adding 2 to 3% of dry salt thereto. All these steps may also be performed in automatic devices and as a continuous process.

In the method of the invention, the cheese is cooled with cold air (-18 to +5°C) or cold water (+0 to +12°C).

In the method of the invention, the organoleptic properties, especially taste, of the product are positively affected.

In accordance with the invention, the cheese may be made either as a continuous cheesemaking process or as batches. The volume of a batch may vary depending on general conditions and available means. The method of the invention is preferably carried out as a batch process.

The invention will be described in more detail by means of the following examples. These examples are only given to illustrate the invention and should not be considered to limit the scope of the invention in any way.

All percentages of the substances are given on a weight basis.

### Example 1

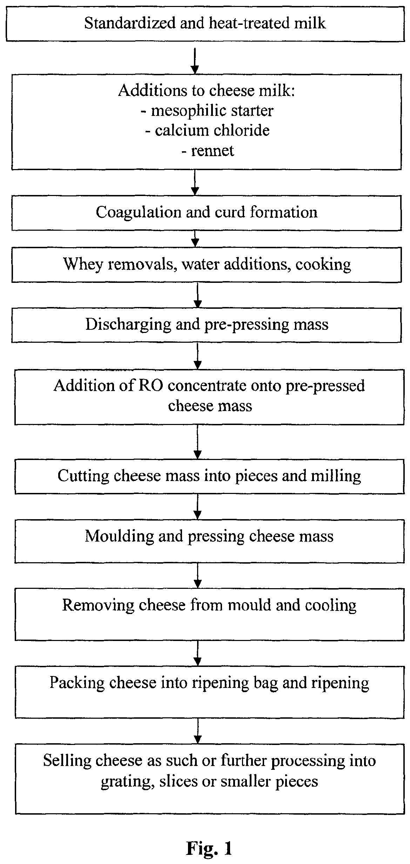

Figure 1 is a flow diagram showing steps of a cheesemaking process. It describes a method for making salt-free milled ripened cheese, wherein milk- or whey-based minerals (RO concentrate described above) are added to a pre-pressed mass.

A milled cheese containing 15% of fat (such as Turunmaa^{®} 15%) was salted in the pre-pressing step with milk- or whey-based minerals (RO retentate), which were added in an amount of 1 to 2% of the cheese weight calculated on the basis of ash content. The bulk starter in the vat was a normal mixed starter (such as CHN-19 by Chr Hansen) in an amount of 0.8 to 1.0% calculated on the basis of milk amount and, alternatively, a thermophilic shocked T101 starter (Valio Oy) in an amount of 0.4% calculated on the basis of milk amount. Alternatively, it is also possible to use a thermophilic non-shocked Lb161 starter (Valio Oy) (0.5 to 1% calculated on the basis of milk amount). In addition to the bulk starter, additional starters LH-32, BS-10, CR-312 by Christian Hansen may be used as such or in different combinations and amounts to impart taste.

In the cooking step, calcium chloride (0.02%) and a sufficient amount of rennet were also added to the cheese mass. If desired, 0.015% of potassium nitrate may be added. From the cooking, the cheese curd was conveyed to a discharge vat, levelled and pre-pressed for about 10 to 20 min. Milk-based minerals (RO concentrate) were added on top of the pre-pressed cheese mass, the cheese mass was cut into pieces, milled and placed into a mould, pressed for 1 to 2 hours, removed from the mould, cooled, packed into ripening bags, put into boxes, arranged on pallets and ripened for 4 to 12 weeks. If necessary, the ripe cheese may be sliced, grated, stamped into various shapes with a mould or further packed into consumer packages.

Alternatively, enzymes, preferably proteolytic enzymes, may be used for imparting taste.

Alternatively, taste imparting starters (adjunct starters) and/or enzymes may be added substantially simultaneously with milk- and/or whey-based minerals.

The following cheeses were made. The amount of whey minerals is based on the ash content of the RO retentate (concentrate).
Cheese 1: 8-week ripening; addition of whey minerals 1%; shocked Valio T-101 starter to vat milk in an amount of 0.4% calculated on the basis of milk amount; proteolytic enzyme to the pre-pressed cheese mass, in an amount of 0.05% calculated on the weight basis of cheese.
Cheese 2: 8-week ripening; addition of whey minerals 1%; shocked Valio T-101 starter to the pre-pressed cheese mass in an amount of 4.8% calculated on the weight basis of cheese. Bulk starter CHN-19 by Chr Hansen to vat milk in an amount of 1% calculated on the basis of milk amount.
Cheese 3: 8-week ripening; addition of whey minerals 1%; additional starters LH-32, BS-10, CR-312 by Chr Hansen and shocked Valio T-101 starter to the pre-pressed cheese mass in an amount of 2.4% calculated on the weight basis of cheese. Bulk starter CHN-19 by Chr Hansen to vat milk in an amount of 1% calculated on the basis of milk amount.
Cheese 4: 12-week ripening at 15°C; addition of whey minerals 2%; starter CHN-19 by Chr Hansen to vat milk in an amount of 1% calculated on the basis of milk amount; additional starters LH-32, BS-10, CR-312 by Chr Hansen were used.
Cheese 5: 8-week ripening; addition of milk minerals 1%; CHN-19 starter by Chr Hansen to vat milk in an amount of 1% calculated on the basis of milk amount.

The sodium content of the finished cheese was 0.06 to 0.12% calculated on the basis of cheese amount.

The pleasantness of appearance, texture and taste of the low-salt cheeses as well as the overall pleasantness thereof were evaluated organoleptically. All properties were evaluated as pleasant and appealing.

### Example 2

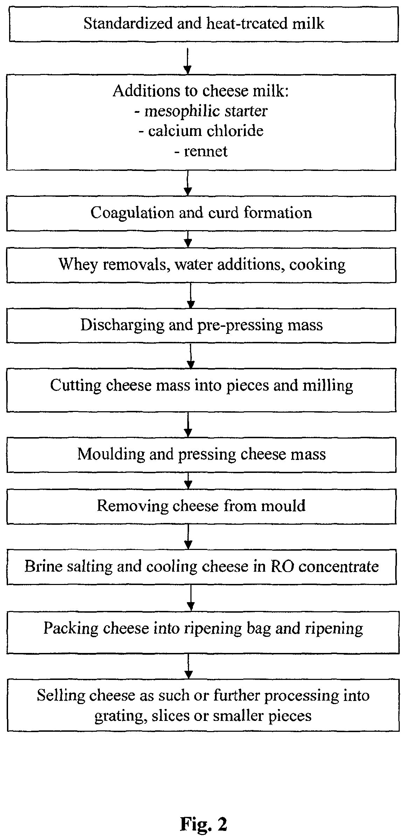

Figure 2 is a flow diagram showing steps of a cheesemaking process. It describes a method for making salt-free milled ripened Turunmaa^{®} cheese with a fat content of 15%, wherein the cheese is salted by brine salting in whey minerals (RO concentrate).

The cheese of the invention was made as in Example 1 except that the cheese was salted by brine salting in an RO concentrate. CHN-19 starter by Chr Hansen in an amount of 1% calculated on the basis of milk amount was used as a bulk starter in the vat. Essential steps after pre-pressing the cheese mass included cutting and milling the cheese mass, moulding and pressing the cheese mass, removing the cheese from the mould, after which the cheese was brine salted and cooled in the RO concentrate for 2 to 6 hours, packed into ripening bags, ripened for 8 weeks and possibly post-processed as in Example 1. The sodium content of the finished cheese was 0.06 to 0.12% calculated on the basis of cheese amount.

The taste of the cheese was evaluated as pleasant.

### Example 3

The production steps of the low-salt, round-eyed cheese (Polar^{®} 15%) of the invention correspond to those of Figure 2 except that the steps of discharging and pre-pressing the mass as well as cutting and milling the cheese mass were replaced by a Casomatic distributor, where the cheese mass (curd) was conveyed directly into moulds and pressed, after which the cheese was brine salted and cooled in an RO concentrate for 2 to 6 hours, packed into ripening bags, ripened and possibly post-processed as in Example 1.

Alternatively, a salt-free round-eyed Polar^{®} 10% was made by producing the cheese curd by the Coagulator technique as a partly continuous process.

Alternatively the low-salt ripened cheese was granular (Oltermanni^{®}).

### Example 4

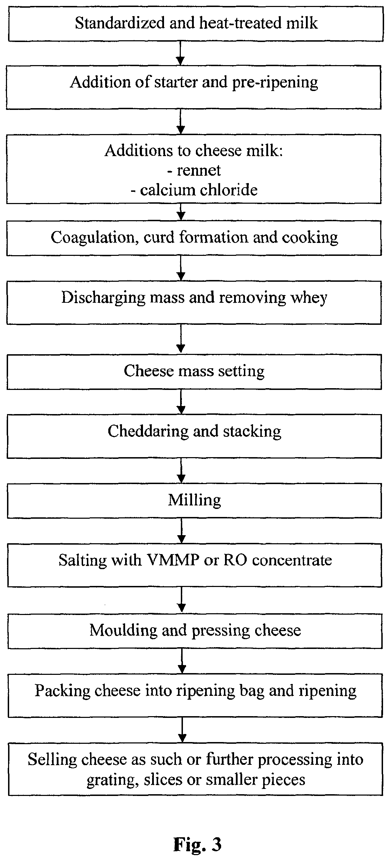

Figure 3 shows a method for making salt-free Cheddar cheese with a conventional technique, wherein salting is performed with milk minerals (Valio Milk Mineral Powder, Valio Oy) (1 to 2% calculated on the basis of cheese weight) after milling.

An essential feature of the production is cheddaring, which refers to a series of steps, in which a cheese mass formed from the set cheese curd is stacked and turned over alternately so that the cheese curd prepared in a vat is formed into a uniform mass. During cheddaring, the original gummy texture of the pre-moulded cheese turns fibrous. Another essential step in making Cheddar cheese is milling of the cheddared cheese mass. The purpose of this step is to cut the cheddared pre-cheese into very small pieces, which makes the removal of whey and salting more effective and facilitates moulding.

The sodium content of the finished cheese was 0.08 to 0.12% calculated on the basis of cheese amount. The fat content of the cheese was 22%. The ripening time was 3 to 6 months. The starter was DVS R-608 0-starter in an amount of 0.015%.

The taste of the cheese was evaluated as pleasant.

Salt-free Cheddar cheese was also made, whereby salting was performed with whey minerals (RO concentrate). The fat content of the cheese was 26%. The cheese was ripened for 14 weeks. Whey minerals were added in an amount of 2% of the cheese weight, calculated on the basis of ash content of the RO concentrate. R-608 starter by Chr Hansen in an amount of 0.015% calculated on the basis of milk amount was used as a bulk starter in the vat. The taste of the cheese was evaluated as pleasant.

### Example 5

Salt-free milled Turunmaa^{®} cheese containing 15% of fat was made as was described in Example 1. A whey-based RO retentate was used for salting in the pre-pressing step, and it was added in an amount of 1% of the cheese weight, calculated on the basis of the ash content. CHN-19 starter by Chr Hansen in an amount of 1% and Lb161 starter by Valio in an amount of 1% calculated on the basis of milk amount were used as bulk starters in the vat.

In the same step, additional taste imparting starters (adjunct starters) were added to the pre-pressed mass by adding shocked T101 starter by Valio in an amount of 2.4% calculated on the basis of cheese amount. The sodium content of the finished cheese was 0.06 to 0.12% calculated on the basis of cheese amount.

The taste of the cheese was evaluated as pleasant.

The taste may be intensified by adding flavours in an amount of 0.05 to 0.5%.

The taste may alternatively be intensified by adding a proteolytic enzyme to the vat milk in an amount of 0.002% calculated on the basis of milk amount or adding a proteolytic enzyme to the pre-pressed mass in an amount of 0.05% calculated on the basis of cheese amount.

In the pre-pressing step, blood pressure-reducing peptides (IPP/VPP/LPP) may also be added to the cheese either in powder form or recombined into the RO retentate in an amount of 140 mg/kg of cheese, in which case the recommended daily dose of 4.2 mg is satisfied (for cheeses, one dose is 30 g according to GDA guideline).

## Claims

1. A method for improving organoleptic properties of a ripened cheese having a sodium content of at most 0.3% (w/w) and a fat content of at most 30% (w/w), comprising a step of adding milk- and/or whey-based minerals to a milk raw material.

2. The method as claimed in claim 1, wherein the sodium content of the cheese is at most 0.12%.

3. The method as claimed in claim 1 or 2, wherein the fat content of the cheese is at most 17% or, if the fat content is more than 17% to 30%, the proportion of hard fat is at most 33% of the fat.

4. The method as claimed in any one of claims 1 to 3, wherein the milk- and/or whey-based minerals are in the form of retentate obtained from reverse osmosis.

5. The method as claimed in any one of claims 1 to 3, wherein the milk- and/or whey-based minerals are a mineral powder known as trademark Valio Milk Mineral Powder VMMP.

6. The method as claimed in any one of the preceding claims, wherein one or more enzymes, preferably a proteolytic enzyme, and/or taste imparting starters (adjunct starters) are added in the cooking step and/or salting of the cheese.

7. A ripened cheese which contains milk- and/or whey-based minerals as a table salt replacement and which has a sodium content of at most 0.3% (w/w), preferably at most 0.12%, and a fat content of at most 30% (w/w).

8. The ripened cheese of claim 7, wherein the fat content is at most 17%, or if the fat content is more than 17% to 30%, the proportion of saturated (hard) fat is at most 33%.

9. A method for manufacturing a ripened cheese having a sodium content of at most 0.3% (w/w) and a fat content of at most 30% (w/w), the method comprising the following steps of:
- renneting a milk raw material
- providing a cheese curd
- discharging the cheese curd to obtain a cheese mass
- if necessary, pre-pressing or alternatively removing at least part of the whey from the cheese mass
- optionally cheddaring, stacking and milling
- optionally salting the pre-pressed or cheddared cheese mass
- optionally cutting the cheese mass into pieces and milling
- moulding and pressing the cheese mass to cheese
- optionally brine salting the cheese
- cooling the cheese
- if desired, packing the cheese into a ripening bag and ripening
- bringing the ripened cheese into a desired size and shape,
wherein the cheese is salted with milk- and/or whey-based minerals.

10. The method as claimed in claim 9, wherein salting with milk- and/or whey-based minerals is performed for the pre-pressed cheese mass and/or brine salting is performed for the moulded and pressed cheese.

11. The method as claimed in claim 9, wherein salting with milk- and/or whey-based minerals is performed in a package, such as a ripening bag.

12. The method as claimed in claim 10, wherein brine salting is performed simultaneously with cooling.

13. The method as claimed in claim 10 for manufacturing Cheddar cheese, wherein, after discharging the cheese curd, the cheese mass is cheddared and stacked.

14. The method as claimed in any one of claims 9 to 13, wherein one or more enzymes and/or one or more starters are added substantially simultaneously with salting.

15. Use of milk- and/or whey-based minerals for preventing quality defects of organoleptic properties of a ripened cheese having a sodium content of at most 0.3% (w/w) and a fat content of at most 30% (w/w).

## Patentansprüche

1. Verfahren zum Verbessern der organoleptischen Eigenschaften eines gereiften Käses mit einem Natriumgehalt von höchstens 0,3 Gew.-% und einem Fettgehalt von höchstens 30 Gew.-%, umfassend einen Schritt, bestehend im Zugeben auf Milch und/oder Molke beruhender Mineralien zu einem Milch-Rohmaterial.

2. Verfahren wie in Anspruch 1 beansprucht, wobei der Natriumgehalt des Käses höchstens 0,12% beträgt.

3. Verfahren wie in Anspruch 1 oder 2 beansprucht, wobei der Fettgehalt des Käses höchstens 17% beträgt oder, falls der Fettgehalt mehr als 17% bis 30% beträgt, der Anteil von Hartfett höchstens 33% des Fettes beträgt.

4. Verfahren wie in einem der Ansprüche 1 bis 3 beansprucht, wobei die auf Milch und/oder Molke beruhenden Mineralien in Form eines aus reverser Osmose erhaltenen Retentats vorliegen.

5. Verfahren wie in einem der Ansprüche 1 bis 3 beansprucht, wobei es sich bei den auf Milch und/oder Molke beruhenden Mineralien um ein Mineralpulver handelt, das unter der Handelsmarke Valio Milk Mineral Powder VMMP bekannt ist.

6. Verfahren wie in einem der vorhergehenden Ansprüche beansprucht, wobei ein oder mehrere Enzyme, vorzugsweise ein proteolytisches Enzym, und/oder geschmacksgebende Starter (Zusatzstarter) beim Kochschritt und/oder Salzen des Käses zugegeben werden.

7. Gereifter Käse, der auf Milch und/oder Molke beruhende Mineralien als Tafelsalzersatz enthält und der einen Natriumgehalt von höchstens 0,3 Gew.-%, vorzugsweise höchstens 0,12%, und einen Fettgehalt von höchstens 30 Gew.-% aufweist.

8. Gereifter Käse nach Anspruch 7, wobei der Fettgehalt höchstens 17% beträgt oder, falls der Fettgehalt mehr als 17% bis 30% beträgt, der Anteil an gesättigtem (Hart-) Fett höchstens 33% beträgt.

9. Verfahren zum Herstellen eines gereiften Käses mit einem Natriumgehalt von höchstens 0,3 Gew.-% und einem Fettgehalt von höchstens 30 Gew.-%, wobei das Verfahren die folgenden Schritte umfasst:
- Versetzen eines Milch-Rohmaterials mit Lab
- Bereitstellen eines Käsebruchs
- den Käsebruch zu entladen, um eine Käsemasse zu erhalten
- falls erforderlich, Vorpressen oder alternativ Entfernen mindestens eines Teils der Molke von der Käsemasse
- gegebenenfalls Cheddaring, Aufschichten und Mahlen
- gegebenenfalls Salzen der vorgepressten oder dem Cheddaring unterzogenen Käsemasse
- gegebenenfalls Schneiden der Käsemasse in Stücke und Mahlen
- Formen und Pressen der Käsemasse zu Käse
- gegebenenfalls Salzen des Käses in Salzlake
- Kühlen des Käses
- falls gewünscht, Verpacken des Käses in einen Reifungsbeutel und Reifen
- den gereiften Käse in eine gewünschte Größe und Form zu bringen,
wobei der Käse mit auf Milch und/oder Molke beruhenden Mineralien gesalzen wird.

10. Verfahren wie in Anspruch 9 beansprucht, wobei das Salzen mit auf Milch und/oder Molke beruhenden Mineralien für die vorgepresste Käsemasse durchgeführt wird und/oder das Salzen in Salzlake für den geformten und gepressten Käse durchgeführt wird.

11. Verfahren wie in Anspruch 9 beansprucht, wobei das Salzen mit auf Milch und/oder Molke beruhenden Mineralien in einer Verpackung, wie zum Beispiel einem Reifungsbeutel, durchgeführt wird.

12. Verfahren wie in Anspruch 10 beansprucht, wobei das Salzen in Salzlake gleichzeitig mit dem Kühlen durchgeführt wird.

13. Verfahren wie in Anspruch 10 beansprucht zum Herstellen von Cheddar-Käse, wobei die Käsemasse nach dem Entladen des Käsebruchs dem Cheddaring unterzogen und aufgeschichtet wird.

14. Verfahren wie in einem der Ansprüche 9 bis 13 beansprucht, wobei ein oder mehrere Enzyme und/oder ein oder mehrere Starter im Wesentlichen gleichzeitig mit dem Salzen zugegeben werden.

15. Verwendung von auf Milch und/oder Molke beruhenden Mineralien zum Verhindern von Qualitätsmängeln der organoleptischen Eigenschaften eines gereiften Käses mit einem Natriumgehalt von höchstens 0,3 Gew.-% und einem Fettgehalt von höchstens 30 Gew.-%.

## Revendications

1. Procédé d'amélioration des propriétés organoleptiques d'un fromage affiné ayant une teneur en sodium de 0,3 % (p/p) au maximum et une teneur en matière grasse de 30 % (p/p) au maximum, comprenant une étape consistant à ajouter des minéraux de lait et/ou de lactosérum à une matière première du lait.

2. Procédé selon la revendication 1, dans lequel la teneur en sodium du fromage est de 0,12 % au maximum.

3. Procédé selon la revendication 1 ou 2, dans lequel la teneur en matière grasse du fromage est de 17 % au maximum ou, si la teneur en matière grasse est supérieure de 17 % à 30 %, la proportion de matière grasse dure est au maximum 33 % de la matière grasse.

4. Procédé selon l'une quelconque des revendications 1 ou 3, dans lequel les minéraux de lait et/ou de lactosérum sont présents sous la forme d'un rétentat obtenu par osmose inverse.

5. Procédé selon l'une quelconque des revendications 1 à 3, dans lequel les minéraux de lait et/ou de lactosérum sont une poudre minérale connue sous la marque de commerce Valio Milk Mineral Powder VMMP

6. Procédé selon l'une quelconque des revendications précédentes, dans lequel une ou plusieurs enzymes, de préférence une enzyme protéolytique, et/ou des levains conférant du goût (levains additionnels) sont ajoutés pendant l'étape de cuisson et/ou pendant le salage du fromage.

7. Fromage affiné qui contient des minéraux de lait et/ou de lactosérum en tant que substitut du sel de table et qui possède une teneur en sodium de 0,3 % (p/p) au maximum, de préférence de 0,12 % au maximum, et une teneur en matière grasse de 30 % (p/p) au maximum.

8. Fromage affiné selon la revendication 7, dans lequel la teneur en matière grasse est de 17 % au maximum ou, si la teneur en matière grasse est supérieure de 17 % à 30 %, la proportion de matière grasse saturée (dure) est au maximum de 33 %.

9. Procédé de fabrication d'un fromage affiné ayant une teneur en sodium de 0,3 % (p/p) au maximum et une teneur en matière grasse de 30 % (p/p) au maximum, le procédé comprenant les étapes suivantes consistant à :
- emprésurer une matière première du lait
- fournir un caillé de fromagerie
- égoutter le caillé de fromagerie pour obtenir une masse de fromage
- si nécessaire, pré-presser ou, en variante, éliminer au moins une partie du lactosérum de la masse de fromage
- facultativement, procéder à une cheddarisation, à un empilage et à un broyage
- facultativement, saler la masse de fromage pré-pressée ou cheddarisée
- facultativement, couper la masse de fromage en morceaux et broyer
- mouler et presser la masse de fromage en fromage
- facultativement, saumurer le fromage
- refroidir le fromage
- si souhaité, conditionner le fromage dans un sachet d'affinage et procéder à l'affinage
- donner au fromage affiné une taille et une forme souhaitées,
où le fromage est salé avec des minéraux de lait et/ou de lactosérum.

10. Procédé selon la revendication 9, dans lequel le salage avec des minéraux de lait et/ou de lactosérum est réalisé pour la masse de fromage pré-pressée et/ou le saumurage est réalisé pour le fromage moulé et pressé.

11. Procédé selon la revendication 9, dans lequel le salage avec des minéraux de lait et/ou de lactosérum est réalisé dans un conditionnement, comme un sachet d'affinage.

12. Procédé selon la revendication 10, dans lequel le saumurage est réalisé en même temps que le refroidissement.

13. Procédé selon la revendication 10 pour fabriquer du fromage Cheddar, dans lequel, après égouttage du caillé de fromagerie, la masse de fromage est cheddarisée et empilée.

14. Procédé selon l'une quelconque des revendications 9 à 13, dans lequel une ou plusieurs enzymes et/ou un ou plusieurs levains sont ajoutés sensiblement et en même temps que le salage.

15. Utilisation de minéraux de lait et/ou de lactosérum pour prévenir les défauts de qualité des propriétés organoleptiques d'un fromage affiné ayant une teneur en sodium de 0,3 % (p/p) au maximum et une teneur en matière grasse de 30 % (p/p) au maximum.
